Europäisches Patentamt

European Patent Office

Office européen des brevets

(11) Publication number: **0 193 581 B1**

## (12) EUROPEAN PATENT SPECIFICATION

(45) Date of publication of patent specification: **02.01.92**

(51) Int. Cl.⁵: **H01B 7/18**, H01B 9/02, C08J 3/24, C08L 23/26, C08F 8/00

(21) Application number: **85904541.1**

(22) Date of filing: **03.09.85**

(86) International application number:
**PCT/US85/01669**

(87) International publication number:
**WO 86/01634 (13.03.86 86/06)**

(54) **CONDUCTIVE AND STRESS GRADING USE OF GELLOIDS.**

(30) Priority: **31.08.84 US 646555**

(43) Date of publication of application:
**10.09.86 Bulletin 86/37**

(45) Publication of the grant of the patent:
**02.01.92 Bulletin 92/01**

(84) Designated Contracting States:
**AT BE CH DE FR GB IT LI NL SE**

(56) References cited:
**WO-A-81/00785       US-A- 4 025 717
US-A- 4 170 575     US-A- 4 187 389
US-A- 4 231 986     US-A- 4 369 284
US-A- 4 414 142     US-A- 4 485 218
US-A- 4 504 699     US-A- 4 509 821**

(73) Proprietor: **RAYCHEM CORPORATION (a Delaware corporation)
300 Constitution Drive
Menlo Park, California 94025(US)**

(72) Inventor: **TOY, Lester, Tungnan
33235 Pheasant Street
Fremont, CA 94536(US)**
Inventor: **CHANG, Rong, Jong
32814 Shaver Lake
Fremont, CA 94536(US)**

(74) Representative: **Auckland, Jacqueline et al
Raychem Limited Intellectual Property Law
Department Faraday Road Dorcan
Swindon, Wiltshire SN3 5HH(GB)**

## Description

### Background of the Invention

a) Field of the Invention

The invention relates to gelloid compositions for conductive and stress grading use.

b) Background Information

Electrical devices often require using materials which will have conductive or stress grading properties. It is useful if the material is stable and shows good adhesion while maintaining electrical stress grading or conductive properties. This is especially true, for example, in high voltage electrical splices, terminations, Y-connections and the like.

Gelatinous compositions are known which are useful for their dielectric properties for electrical insulation use. For example, in UK Published application No. 2,133,026 a sealant material having a certain cone penetration and elongation is disclosed. The particular embodiment described in that application utilizes a polyurethane composition containing olefinic unsaturation.

In U.S. Patent No. 3,425,967, silicone compositions are described. These silicone compositions show thermal insulating properties and are useful with electrical devices. However, insulating compositions are used in different locations and exhibit higher volume resistivity then would a conductive or stress grading material.

In U.S. Patent Nos. 4,060,078 and 4,248,685 hydrophilic gels are described comprising 10-90% by weight of an $\alpha$, $\beta$-olefinically unsaturated carboxylic acid, and 90-10% of an unsaturated comonomer, said composition being useful as an aid in making electrical current contact for medical application as well as a skin interfacing film. The compositions are water soluble, and exhibit second degree blocking. No use is described, however, for control of electric or magnetic fields or ionizable voids.

In U.S. Patent No. 4,369,284, gelatinous compositions are described which comprise an intimate blend admixture of poly(styrene-ethylene-butylene-styrene) tri-block copolymer. They are described as useful for toys, therapeutic hand exercising grips, shock absorbers, acoustical insulation and the like.

The above described gelatinous compositions are described for a wide variety of uses including electrical insulation uses. However no description of, use of, or the advantages of the compositions for control of magnetic or electric fields or ionizable voids or filling ionizable voids or providing uniform voltage drop especially on high voltage electrical cables is disclosed.

No 81/00785 describes a cohesive nonsticky electrically conductive gel for facilitating low resistance contact between a metal electrode and a biological body. The gel comprises an aqueous solution of up to saturated concentrations of ionized salts as the conducting agent, a natural gum capable of crosslinking, and a crosslinking material which provides the electrically conductive gel with sufficient internal strength to remain cohesive without reinforcement. The gel has good electrical characteristics and improved physical properties which prevent the gel from leaving a messy residue on the skin of the patient or on the electrode.

### SUMMARY OF THE INVENTION

It has been discovered that certain gelloid compositions which have a unique combination of properties are especially useful as conductive and stress grading material with electrical devices. The compositions are conductive (i.e. control the effect of magnetic or electric fields, or ionizable voids) or stress grading (i.e. material used to fill ionizable void or provide uniform voltage drop between a conductor and ground shield) materials which further may be used as a seal, may reduce corrosion, and can be formed into shapes, are stable and may be preformed or made in situ either with or without an appropriate backing.

Using the gelloid compositions as stress grading and conductive compositions, the gelloid compositions comprise a polymer having dispersed therein a liquid in an amount of from about 20% to about 95% by weight based on the weight of the liquid and polymer and optionally having dispersed therein a stress grading or conductive filler up to about 30% by volume and having a cone penetration value of from 30 to about 350 ($10^{-1}$ mm). The conductive gelloid compositions having a volume resistivity of less than about $10^7$ ohm-cm at 50 Hz and the stress grading gelloid compositions having a specific impedance of $10^7$ -$10^{10}$ ohm-cm at 50 Hz.

In accordance with one aspect of the present invention, there is provided a method of controlling the effects of magnetic fields or electric fields, or ionizable voids in an electrical device comprising:

a) selecting a conductive gelloid composition comprising a polymer having dispersed therein a liquid in an amount of from 20% to 95% by weight based on the weight of the liquid and polymer, having a cone penetration value of from 30 to 350 ($10^{-1}$ mm) and containing a conductive filler of up to 30% by volume selected from the group consisting of carbon black, graphite, metal powder, metal flake, metal oxide, silicon carbide and barium titanate so that the composition has a volume resistivity of less than $10^7$ ohm-cm; and

b) applying the gelloid composition to an electrical device in the area in which the effect of a magnetic field or electrical field or ionizable void is to be controlled.

In accordance with another aspect of the present invention there is provided a method of filling ionizable voids in an electrical device or providing uniform voltage drop between conductor and ground shielding in an electrical device comprising:

a) selecting a stress grading gelloid composition comprising a polymer having dispersed therein a liquid in an amount of from 20% to 95% by weight based on the weight of the liquid and polymer, having a cone penetration value of from 30 to 350 ($10^{-1}$ mm) and having a specific impedance of $10^7$-$10^{10}$ ohm-cm at 50 Hz; and

b) applying the gelloid composition to an electrical device in the area in which an ionizable void is to be filled or the uniform voltage drop provided.

## DETAILED DESCRIPTION OF THE INVENTION

The polymer used in the invention is a polymer capable of having a liquid and a stress grading or conductive filler dispersed therein. Optionally, the polymer is capable of being crosslinked. It is preferred that the polymer be a urethane, a silicone, a block or graft copolymer or a polymer as described in applicants published application EP-A-0174165. The polymers have a liquid dispersed therein from about 20% to about 95% by weight based on the weight of the polymer and liquid. A stress grading or conductive filler is dispersed therein up to about 30% by volume of the total composition. The liquid can further act as a plasticizer, compatibilizer, tackifier or like for the compositions are preferably elastomeric and substantially non-hydrophilic.

By conductive composition is meant a composition that is placed on an electrical device such that it functions to control the effects of magnetic field or electric field either externally or internally created especially at high voltages (i.e. greater than 1 kV). Conductive materials may also be placed so as to eliminate the effect of ionizable voids via the Farady cage effect thus creating a field of equal voltage potential around an ionizable void. An ionizable void is any space near high voltage conductors where ionization can occur due to the gases present and the electrical stresses exerted on them. A conductive gelloid composition will have a volume resistivity of less than $10^7$ ohm-cm at 50 Hz and a cone penetration value of from about 30 to about 350 ($10^{-1}$ mm). The composition may have these properties on its own or suitable conductive fillers may be added up to 30% to achieve the desired result. Suitable conductive fillers include carbon black, treated or untreated graphites, metal powder and flakes, etc.

By stress grading composition is meant a composition that is positioned on an electrical device such that it functions to eliminate ionizable voids at a conductor or the semi-conductor cutback of a cable especially at high voltage, (i.e. greater than 1 Kv) and provide uniform electrical stress at the inner surface of an insulating material positioned over the stress grading composition. The area around the connector and semi-conductive cut back of high voltage cables operate at such high electrical stresses that such a void would lead to failure of the splice. Stress grading compositions may also be used to create uniform voltage drop between a conductor and a ground shield. Stress grading filler may be added to the gelloid compositions in order for the gelloid compositions to achieve the desired result, i.e. have specific impedance of $10^7$-$10^{10}$ ohm-cm at 50 Hz. Suitable stress grading fillers include carbon blacks, treated or untreated graphites, metal oxides, silicone carbide and barium titanate.

The preferred storage modulus of the gelloid compositions of the invention is $(1 + 2.5v + 14.4v^2)$x dynes/cm$^2$ wherein x is less than $5 \times 10^5$ at $30^\circ$C and greater than $5 \times 10^3$ at $90^\circ$C, measured at 5 radians/sec at a strain of 10%, and wherein v is the volume fraction of filler. The formula $(1 + 2.5v + 14.1v^2)$ is the standard formula known in the art to account for the effects of any fillers added. (See e.g. Guth, Journal of Applied Physics, vol. 16, pg. 20, 1945). The storage modulus (often referred to as G') is defined as the stress in phase with the strain in a sinusoidal shear deformation divided by the strain. It is a measure of the energy stored and recovered per cycle when different systems are compared at the same strain amplitude.

The preferred dynamic viscosity of the gelloid composition of the invention is $(1 + 2.5v + 14.1v^2)$y poises

wherein y is less than $1 \times 10^5$ at 30°C and greater than $3 \times 10^3$ at 90°C, measured at 5 radians/sec at a strain of 10%, and wherein v is the volume fraction of the filler. A discussion of storage modulus and dynamic viscosity can be found in Viscoelastic Properties of Polymers, Ferry, pg. 43-47, 1970. The dynamic viscosity relates to the ratio of stress in phase with the rate of strain divided by the rate of strain.

The preferred gelloid compositions of this invention exhibit first or second degree blocking. Blocking describes an adherence between the surfaces of the composition under test load of such degree that when the upper specimen is lifted the bare specimen will cling thereto. In first degree blocking the specimens may be parted with no evidence of damage to either surface. In second degree blocking the specimens cannot be separated without damage thereto. The test is performed according to ASTM D-1146. Blocking for compositions of the invention may be either cohesive (between the same material) or adhesive (between the test subject and a substrate).

The term gelloid is used herein to refer to the compositions used in this invention as they have the physical appearance of a gelatinous material but do not necessarily have a gel fraction and thus may or may not be considered traditional gels. Gelloid compositions of this invention can have a gel fraction from 0 and 100% based on the percentage of crosslinkable polymer.

The gelloid compositions of the invention should have a cone penetration value as measured by ASTM D-937-77 of from about 30 to about 350 ($10^{-1}$ mm) and preferably from about 50 to about 150 ($10^{-1}$ mm). Further, said composition should preferably have an elongation as measured by ASTM D-412 of from about 25% to about 750% and more preferably from about 150% to 600%.

The electrical properties of the composition make them useful in stress grading and conductive applications. For stress grading applications the compositions preferably have a dielectric constant of greater than 6 and a specific impedance of $10^7$-$10^{10}$ ohm-cm at 50 HZ (ASTM D-150), and for conductive applications the compositions preferably have a volume resistivity of less than $10^7$ ohm-cm (ASTM-D-257).

The liquid dispersed in the polymer in accordance with this invention can be any liquid which is capable of being dispersed in the polymer in an amount from about 20% to about 95%, and which essentially does not react during crosslinking of the polymer. The liquid may be a plasticizer, compatibilizer, tackifier. Suitable liquids include, for example, paraffinic oils, naphthenate oils, aromatic oils, liquid polybutenes, alkyl (or aryl) phthalates, vegetable oils, mineral oils, trimellitates, esters of polyethylene glycols, alkyl (or aryl) phosphates, methyl ester of hydrogenated wood rosin, liquid rosin oils, pine tar, polyterpenes, non-reacting liquid rubbers, the starting liquid polymer which remains uncrosslinked or at least crosslinked less than .1 crosslink per weight average molecule, and the like.

The gelloids may preferably be made with a crosslinked or crosslinkable polymer. Crosslinking may be by any conventional crosslinking means, preferably UV means, irradiation means or by chemical means. Radiation crosslinking can be accomplished by electron beam, or the like treatment. Suitable crosslinking promoters can be incorporated to encourage radiation crosslinking such as triallylcyanuate and triallylisocyanuate. Suitable chemical crosslinking agents can be chosen based on the individual polymer or polymers used. For example, a phenolic resin or p-quinone dioxime can be used to cure butyl rubber, peroxide can be used to cure EPDM or amine terminated polyamide can be used to cure epichlorohydrin rubber.

Optionally, plasticizers may be added to help obtain a gelloid with the desired cone penetration values. Such plasticizers preferably would include all liquids which are capable of reducing the viscosity of the base rubber, and are compatible with the base rubber.

An additional filler may be added to the composition, if desired. The term "filler" is used herein to include all solid additives including particulate matter or fibrous matter present in the composition. These additional fillers include pigments, reinforcing agents, thermal stabilizers, fungicides, biocides, flame retardants, for example, aluminum trihydrate, and the halogenated flame retardants, leak indicators (i.e. chemicals which react upon exposure to certain chemicals), corrosion inhibitors, ultraviolet light stabilizers, processing aids, impact modifiers and the like.

The gelloid compositions are preferably formed by mixing a liquid polymer with any desired fillers including stress grading, conductive or additional, any crosslinking agents or the like and the liquid and subjecting the mixture to a crosslinking means. The composition will generally take the shape of the container during crosslinking but can be reshaped e.g. by cutting as desired. It is also possible to form the composition in situ, i.e. by applying the liquid polymer and compatible liquid in the location to be used and crosslinking at that particular location. See e.g. Applicant's published EP-A-0174165 application. A further way of making the gelloids would be to start with a solid polymer either crosslinked or not and making a filled polymer gelloid using means known in the art adding conductive or stress grading fillers where necessary.

The gelloid compositions for stress grading and conductive use may be made into cold applied tapes,

EP 0 193 581 B1

with or without a backing, (said backing usually being polymeric), used with molded rubbers, attached to dimensionally recoverable tubular and sheet products; used with hot applied tapes, with or without backing. They can be formed into shaped articles, such as, profiles shaped to accommodate an adjacent pair of conductors or cables. Shaped articles are particularly useful where a seal is necessary in addition to stress grading and conductive properties. A particular gelloid may therefore be chosen based on the particular application of the gelloid and the desired properties. It is a desirable property of these gelloids that they are easily handled and reenterable when used in, for example, splices or terminations. When said gelloids are applied to a support such as a backing, a molded rubber, or are in a container they may be adhered to the support by any convenient method. For example, they may stick due to their own tackiness, may be heat treated, may be formed in situ or mastics and adhesives may be used to further enhance or make permanent the adhesion. Other means of applying the gelloids to an electrical device include both internal and external use of solder, wirebond or crimps as would be accomplished by one skilled in the art.

As is readily apparent the compositions of the invention are extremely versatile in their ability to be used in a variety of situations for stress grading and conductive electrical use, especially high voltage use. The above list is illustrative of such uses and is provided as illustration and not limitation. One skilled in the art would be able to provide alternative uses as is contemplated by the invention. In order to more fully describe the invention several uses of a gelloid composition as a stress grading or conductive gelloid composition are described in detail below.

When gelloid compositions of the invention are conductive, or stress grading they can be used for example in high voltage applications. When jointing high voltage cables (i.e. above 1kV), the insulation, shielding, grounding, jacket, etc., must be stripped back to expose the conductors. The exposed conductors are then connected by mechanical means such as connectors, solder, wire, etc. The area of the exposed connection is under high electrical stress. Gelloid compositions of the invention having a specific impedance of $10^7$-$10^{10}$ ohm-cm at 50Hz can be applied to these areas to eliminate ionizable voids as stress grading material. This gelloid material is also placed immediately adjacent the connection at the end of the cutback shielding or other conductive layer and any other area of the joint where stress grading is necessary. A composition which is an insulating material, can be placed over the stress grading inner layer. Likewise, the conductive gelloid composition, i.e. those having a volume resistivity of less than $10^7$ ohm-cm, can be outer conductive layer on such high voltage joint placed over the insulating layer. Likewise, when terminating a high voltage cable a stress grading inner layer of the gelloid composition can be used.

The following examples are illustrative only are not limiting. One skilled in the art would readily be able to select appropriate crosslinking agents, crosslink promoters, polymers, liquids, radiation amounts, etc. for a particular application without undue experimentation.

## DESCRIPTION OF THE PREFERRED EMBODIMENTS

Example 1 - Chemically crosslinked epichlorohydrin (stress grading gelloid-oil resistant)

The following formulation was mixed and then cured for 60 minutes at 100°C to form a gelloid.

| | |
|---|---|
| Hydrin 10Xl (liquid epichlorohydrin rubber | 100g |
| Dimer acid diisocyanate-crosslinking agent | 46g |
| dioctyl phthalate-plasticizer | 100g |
| T-12 - tin catalyst | 10g |
| Dabco 33LV (Tertiary amine - co-catalyst) | 2g |
| Antioxidant 2246-substituted phenol type of antoixidant | 0.8g |

The resulting gel had a specific impedance at 50 Hz of 1.8 x $10^9$; a permitivity @ 50 Hz of 7.7, a cone penetration value of 51.

Example 2 - Stress grading polyamide crosslinked Hydrin gel

5

| Hydrin 10Xl (liquid epichlorohydrin rubber) | 100g |
| Versamid 125 (polyamide resin) | 15g |
| Lectro 78 (lead stabilizer) | 5g |
| Diundecylphthalate (plasticizer) | 30g |
| Red iron oxide | 3.2g |

The composition was cured at 90°C for 4 hours to form a gel. The resulting gel had a specific impedance at 50 Hz of 1.5 x $10^8$ ohm-cm at 50 Hz; a permittivity @ 50 Hz of 18.90; a cone penetration value of 150.

Example 3 - Stress Grading Butyl gel

| Kalene 200 (liquid butyl rubber) | 100g |
| Kaydol oil (mineral oil) | 95g |
| p-quinone dioxime prespersion (62.5%) | 4.8g |
| Lead dioxide prespersion (50%) | 18g |
| N990 Carbon Black (Thermax MT) | 69.4g |
| S37 Carbon Black) (Vulcan P) | 14.7g |

Crosslinked at 100°C for 30 minutes resulted in a gel with cone penetration value of 81, a specific impedance of 9.5 x $10^8$, a permitivity of 32.6.

Example 4 - Conductive Butyl Gel

| Kalene 200 (liquid Butyl rubber) | 100g |
| Kaydol oil (mineral oil) plasticizer | 95g |
| p-quimone dioxime prespersion (62.5%) curing agent | 4.8g |
| Lead dioxide prespersion (50%) curing activiator | 18g |
| Ketjen carbon black (conductive carbon black) | 20g |

The above formulation was crosslinked at 100°C for 30 minutes and resulted in a gel with cone penetration value of 42, volume resistivity 2.4 x $10^5$ ohm-cm.

Example 5 - High Molecular Weight Butyl Gelloid

The following formulation was mixed and cured @90°C for 3 hrs to form a gelloid material.

| Butyl High Molecular Weight Butyl Rubber | 20g |
| Indopol H300 (liquid polybutene) | 80g |
| W-1 conductive filler (antimony and tin oxide coated titanium dioxide) | 100g |
| Intercalcalated graphite (copper chloride treated graphite) | 20g |
| QDO Prespersion (curing agent) | 1.6g |
| Kenmix (lead peroxide prespersion) | 7.6g |
| Volume Resistivity | 1.2 X $10^8$ ohm-cm |
| Permitivity @ 50 Hz | 18 |
| Specific Impedance @ 50 Hz | 1.99 X $10^9$ |
| Cone penetration | 101 |

Example 6 - Block Copolymer Gelloid

The following formulation was mixed and cured at 150°C for 30 minutes.

6

| Kraton G 1652 (SEBS Block Copolymer) | 100g |
|---|---|
| Sunpar 2280 (plasticizer) | 800g |
| Ketjenblack (conductive carbon black) | 80g |
| Dicumyl peroxide (curing agent) (Di Cup 40 KE) | 4g |
| Irganox 1010 | 2g |
| Volume resistivity | $1.36 \times 10^6$ ohm-cm |
| Permitivity @ 50 Hz | 6267.1 |
| Specific impedance at 50 Hz | $5.0 \times 10^6$ |
| Cone Penetration | 46 |

Example 7 - Silicone Stress Grading Gelloid

The following formulation was mixed and electron beamed 8 Megarad.

| Dow Corning 200 fluid 12,500 ct. viscosity (silicone fluid) | 100g |
|---|---|
| W-1 conductive filler (antimony and tin oxide coated titanium dioxide) | 175g |
| Volume Resitivity | $3.23 \times 10^9$ ohm-cm |
| Permitivity @ 50 Hz | 18.5 |
| Specific Impedance @ 50 Hz | $1.94 \times 10^9$ |
| Cone penetration | 146 |

Example 8 - Silicone Conductive Gelloid

The following formulation was mixed and electron beamed 8 Megarads.

| Dow Corning Fluid 12,500 ct. viscosity (silicone fluid) | 100g |
|---|---|
| Intercalated graphite (copper chloride treated graphite) | 30g |

The mixture was given an electron beam dose of 8 MR.

| Volume resistivity | $3.84 \times 10^6$ |
|---|---|
| Cone penetration | 134 |

**Claims**

1. A method of controlling the effects of magnetic fields or electric fields, or ionizable voids in an electrical device, comprising:

    a) selecting a conductive gelloid composition comprising a polymer having dispersed therein a liquid in an amount of from 20% to 95% by weight based on the weight of the liquid and polymer, having a cone penetration value of from 30 to 350 ($10^{-1}$ mm) and containing a conductive filler of up to 30% by volume selected from the group consisting of carbon black, graphite, metal powder, metal flake, metal oxide, silicon carbide and barium titanate so that the composition has a volume resistivity of less than $10^7$ ohm-cm; and

    b) applying the gelloid composition to an electrical device in the area in which the effect of a magnetic field or electrical field or ionizable void is to be controlled.

2. A method of filling ionizable voids in an electrical device or providing uniform voltage drop between a conductor and ground shield comprising:

    a) selecting a stress grading gelloid composition comprising a polymer having dispersed therein a liquid in an amount of from 20% to 95% by weight based on the weight of the liquid and polymer, having a cone penetration value of from 30 to 350 ($10^{-1}$ mm) and having a specific impedance of

7

$10^7$ to $10^{10}$ ohm-cm at 50 Hz; and

b) applying the gelloid composition to an electrical device in the area in which an ionizable void is to be filled or the uniform voltage drop provided.

3. A method according to Claim 2 wherein the gelloid composition selected further comprises a stress grading filler of up to 30% by volume.

4. A method according to Claim 1 or claim 2, wherein the polymer comprising the gelloid composition selected is crosslinked.

5. A method according to Claim 1 or claim 2, wherein the gelloid composition selected further exhibits first or second degree blocking.

6. A method according to Claim 1 or claim 2, wherein the gelloid composition has a cone penetration value of from 50 to 150 ($10^{-1}$ mm).

7. A method according to Claim 1 or claim 2, wherein the gelloid composition has an elongation of from 25% to 750%.

8. A method according to Claim 7, wherein the gelloid composition has an elongation of from 150% to 600%.

9. A method according to Claim 1 or claim 2, which further provides the step of covering the gelloid composition with an outer layer.

**Revendications**

1. Procédé pour ajuster les effets de champs magnétiques, de champs électriques ou de vides ionisables dans un dispositif électrique, consistant :

a) à choisir une composition de géloïde conductrice comprenant un polymère renfermant, à l'état dispersé, un liquide en une quantité de 20 % à 95 % en poids, sur la base du poids du liquide et du polymère, ayant une valeur de pénétration du cône de 30 à 350 ($10^{-1}$ mm) et contenant une charge conductrice en une quantité allant jusqu'à 30 % en volume, choisie dans le groupe comprenant le noir de carbone, le graphite, une poudre métallique, des paillettes métalliques, un oxyde métallique, le carbure de silicium et le titanate de baryum, de sorte que la composition possède une résistivité volumique inférieure à $10^7$ ohms-cm ; et

b) à appliquer la composition de géloïde à un dispositif électrique dans la zone dans laquelle l'effet d'un champ magnétique, d'un champ électrique ou d'un vide ionisable doit être ajusté.

2. Procédé pour remplir des vides ionisables dans un dispositif électrique ou pour provoquer une chute uniforme de tension entre un conducteur et un écran de mise à la terre consistant :

a) à choisir une composition de géloïde à gradation de tension comprenant un polymère renfermant, à l'état dispersé, un liquide en une quantité de 20 % à 95 % on poids, sur la base du poids du liquide et du polymère, ayant une valeur de pénétration du cône de 30 à 350 ($10^{-1}$ mm) et ayant une impédance spécifique de $10^7$ à $10^{10}$ ohms-cm à 50 Hz ; et

b) à appliquer la composition de géloïde à un dispositif électrique dans la zone dans laquelle un vide ionisable doit être rempli ou bien la chute uniforme de tension doit être réalisée.

3. Procédé suivant la revendication 2, dans lequel la composition de géloïde choisie comprend en outre une charge à gradation de tension, en une quantité allant jusqu'à 30 % en volume.

4. Procédé suivant la revendication 1 ou la revendication 2, dans lequel le polymère constituant la composition de géloïde choisie est réticulé.

5. Procédé suivant la revendication 1 ou la revendication 2, dans lequel la composition de géloïde choisie présente en outre un blocage du premier ou du second degré.

6. Procédé suivant la revendication 1 ou la revendication 2, dans lequel la composition de géloïde possède une valeur de pénétration du cône de 50 à 150 ($10^{-1}$ mm).

7.  Procédé suivant la revendication 1 ou la revendication 2, dans lequel la composition de géloïde possède un allongement de 25 % à 750 %.

8.  procédé suivant la revendication 7, dans lequel la composition de géloïde présente un allongement de 150 % à 600 %.

9.  Procédé suivant la revendication 1 ou la revendication 2, qui comprend en outre l'étape consistant à recouvrir la composition de géloïde avec une couche extérieure.

## Patentansprüche

1.  Verfahren zum Steuern der Auswirkungen von Magnetfeldern oder elektrischen Feldern oder ionisierbaren Hohlräumen in einer elektrischen Vorrichtung, das folgende Schritte aufweist:
    a) Auswählen einer leitfähigen gallertartigen Zusammensetzung, die ein Polymer aufweist, in dem eine Flüssigkeit in einer Menge von 20-95 Gew.-%, bezogen auf das Gewicht der Flüssigkeit und des Polymers, dispergiert ist, einen Konuspenetrationswert von 30-350 ($10^{-1}$ mm) hat und einen leitfähigen Füllstoff von bis zu 30 Vol.-% enthält, der aus der aus Ruß, Graphit, Metallpulver, Metallflocken, Metalloxid, Siliciumcarbid und Bariumtitanat bestehenden Gruppe ausgewählt ist, so daß die Zusammensetzung einen spezifischen Volumenwiderstand von weniger als $10^7$ Ohm-cm hat; und
    b) Aufbringen der gallertartigen Zusammensetzung auf eine elektrische Vorrichtung in dem Bereich, in dem die Auswirkung eines Magnetfelds oder elektrischen Felds oder eines ionisierbaren Hohlraums gesteuert werden soll.

2.  Verfahren zum Ausfüllen von ionisierbaren Hohlräumen in einer elektrischen Vorrichtung oder zum Vorsehen eines gleichmäßigen Spannungsabfalls zwischen einem Leiter und einem Erdungsschirm, das folgende Schritte aufweist:
    a) Auswählen einer gallertartigen Spannungsverteilungs-Zusammensetzung, die ein Polymer aufweist, in dem eine Flüssigkeit in einer Menge von 20-95 Gew.-%, bezogen auf das Gewicht der Flüssigkeit und des Polymers, dispergiert ist, einen Konuspenetrationswert von 30-350 ($10^{-1}$ mm) und eine spezifische Impedanz von $10^7$-$10^{10}$ Ohm-cm bei 50 Hz hat; und
    b) Aufbringen der gallertartigen Zusammensetzung auf eine elektrische Vorrichtung in dem Bereich, in dem ein ionisierbarer Hohlraum auszufüllen oder der gleichmäßige Spannungsabfall vorzusehen ist.

3.  Verfahren nach Anspruch 2, wobei die ausgewählte gallertartige Zusammensetzung ferner einen SpannungsverteilungsFüllstoff von bis zu 30 Vol.-% aufweist.

4.  Verfahren nach Anspruch 1 oder 2, wobei das die ausgewählte gallertartige Zusammensetzung aufweisende Polymer vernetzt ist.

5.  Verfahren nach Anspruch 1 oder 2, wobei die ausgewählte gallertartige Zusammensetzung ferner Blocken ersten oder zweiten Grades aufweist.

6.  Verfahren nach Anspruch 1 oder 2, wobei die gallertartige Zusammensetzung einen Konuspenetrationswert von 50-150 ($10^{-1}$ mm) hat.

7.  Verfahren nach Anspruch 1 oder 2, wobei die gallertartige Zusammensetzung eine Dehnung von 25-750 % hat.

8.  Verfahren nach Anspruch 7, wobei die gallertartige Zusammensetzung eine Dehnung von 150-600 % hat.

9.  Verfahren nach Anspruch 1 oder 2, das ferner den Schritt des Abdeckens der gallertartigen Zusammensetzung mit einer äußeren Schicht vorsieht.